# EUROPEAN PATENT APPLICATION

(11) **EP 0 962 432 A1**
(43) Date of publication of application: **08.12.1999**
(21) Application number: 98109948.4
(22) Date of filing: 30.05.1998
(51) Int. Cl.: C04B 41/72, E04G 23/02

(54) **Method and apparatus for the removal of ionic impurities from reinforced concrete structures**

(71) Applicant: General Coatings NV, 1210 Brussel (BE)
(72) Inventor: Bourcy, Jean-Claude, 4607 Dalhem (BE); Gilmard, Michel, 5590 Achene (BE); Dupont, Jean-Pierre, 1460 Virginal-Samme (BE); Claessens, Olivier, 3090 Overijse (BE)
(74) Representative: Bird, William Edward

(57) **Abstract**

A method and an apparatus for removing an ionic impurity from a reinforced concrete structure (6) is described which includes contacting the surface of the concrete structure (6) with an aqueous electrolyte (8) and contacting the electrolyte with an electrode material (7) other than the metal reinforcing of the concrete structure to form an electrochemical cell between the metal reinforcing and the electrode. Preferably, the electrolyte includes the salt of a weak acid and in particular a salt of an organic acid is preferred. No current connection between the electrode and the reinforcing of the concrete is required.

## Description

The present invention relates to a method and an apparatus for the removal of ionic impurities from concrete, particularly reinforced concrete structures, in particular to the removal of chloride ions.

### TECHNICAL BACKGROUND

Much has been written about the corrosion of the metal reinforcing of reinforced concrete structures either through a high chloride or carbonate concentration close to the reinforcing bars (rebars) or through a combination of both. With respect to chloride contamination it has been proposed to remove chlorides by the use of direct current. To generate an electric current it is known to apply an aqueous electrolyte to the outside of the concrete structure usually in some viscous or thixotropic form, e.g. mixed with paper or fibre pulp, to apply an electrode (anode) material to the outside or generally in contact with the electrolyte and then to impress a direct voltage between the anode and the rebar. The negatively charged chloride ions migrate towards the anodes. The speed of this migration is determined to a certain extent by the magnitude of the current flowing: it has been found that the larger the current, the faster the removal but the more inefficient the complete process is as far as energy consumption is concerned.

Following the publication of the article by J. E. Slater entitled "Electrochemical Removal of Chlorides from Concrete Bridge Decks" in Materials Performance, 1976, pp 21-26 various modifications have been proposed to the original scheme. Modifications are described, for instance, in EP 200 428, US 5,141,607 or US 5,296,120. The provision of a power supply on site over several days or weeks is inconvenient. Making electrical contact to the rebar damages the surface of the concrete. Further, the electrolyte tends to dry out and has to be replaced or at least moistened again which increases the labour and material costs of the process.

EP-A-723 947 describes a method of treating concrete without the use of a battery. The known method requires connection of the rebar to an external electrode in contact with an electrolyte which also contacts the concrete. The electrolytes proposed are highly aggressive alkalis. Further, it is necessary to make several connections between the rebar and the external electrode which damages the surface of the concrete.

It is an object of the present invention to provide a method and an apparatus for the removal of ionic impurities, in particular chlorides from reinforced concrete structures which is easier and cheaper to carry out than known methods and is preferably environmentally safer.

In particular, it is an object of the present invention to provide a method and an apparatus for the removal of ionic impurities, in particular chlorides from reinforced concrete structures which does not require an energy supply.

### SUMMARY OF THE INVENTION

The present invention may provide a method removing an ionic impurity from a reinforced concrete structure comprising the steps of:
contacting the surface of the concrete structure with an aqueous electrolyte including a salt of an organic acid, and
contacting the electrolyte with an electrode material other than the metal reinforcing of the concrete structure to form an electrochemical cell between the metal reinforcing and the electrode.

The present invention may also provide a method of removing an ionic impurity from a reinforced concrete structure comprising the steps of:
contacting the surface of the concrete structure with an aqueous electrolyte; contacting the electrolyte with an electrode material other than the metal reinforcing of the concrete structure to form an electrochemical cell between the metal reinforcing and the electrode, and
while the ionic impurity is being removed: preventing any substantial electrical current connection external to the concrete between the electrode material and the material of the reinforcing.

The present invention may include an apparatus for removing an ionic impurity from a reinforced concrete structure comprising:
a container for holding an aqueous electrolyte including a salt of an organic acid in contact with the surface of the concrete structure, and
an electrode material other than the material of the metal reinforcing of the concrete contacting the electrolyte and forming an electrochemical cell with the metal reinforcing.

The present invention may also include an apparatus for removing an ionic impurity from a reinforced concrete structure comprising:
a container surrounding a portion of the surface of the concrete structure;
an aqueous electrolyte in the container and in contact with the portion of the surface of the concrete structure;
an electrode material other than the metal of the concrete reinforcing contacting the electrolyte and forming an electrochemical cell with the metal reinforcing; and
substantially no current connection for removing the ionic impurity external to the concrete between the electrode material and the metal reinforcing.

Preferably, the electrode material is more electropositive than the material of the reinforcing, e.g. magnesium or aluminium for steel reinforced concrete, when an anion is to be removed from the concrete, e.g. chloride, The process is preferably carried out over several days or weeks and does not necessarily involve an external energy source nor does it require damaging the outer layer of concrete to obtain access to the rebar reinforcing of the concrete, e.g. to make a current connection. Salts of weak acids, in particular salts of organic acids are particularly preferred for the electrolyte. It is preferred if the major additive to the aqueous electrolyte is the above mentioned salt or salts.

The dependent claims define further individual embodiments of the present invention. The present invention its advantages and embodiments will now be described with reference to the following drawings.

### BRIEF DESCRIPTION OF THE DRAWINGS

Fig. 1 is a schematic side representation and Fig. 2 is a schematic cross-sectional representation of a container for removal of ionic impurities from a horizontal reinforced concrete structure in accordance with a first embodiment of the present invention.
Fig. 3 is a schematic side representation of a container for removal of ionic impurities from a vertical or inclined concrete structure in accordance with a first embodiment of the present invention.
Fig. 4 is a plot of chloride removal from reinforced concrete versus time for various electrode/electrolyte combinations in accordance with the present invention.
Fig. 5 is a plot of voltage difference between the reinforcing of the concrete and the electrode (anode) versus time for the various electrode and electrolyte combinations of Fig. 4.

### DESCRIPTION OF THE ILLUSTRATIVE EMBODIMENTS

The present invention will be described with reference to specific embodiments and certain drawings but the invention is not limited thereto but only by the claims. The present invention will also mainly be described with reference to the removal of chloride ions from reinforced concrete structures but the invention is not limited thereto but only by the claims. Also various arrangements of a container 2 are described but it should be understood that various container forms may be used in accordance with the present invention, in particular, the present invention may applied to vertical, horizontal or inclined concrete surfaces and/or vertical, horizontal or inclined concrete structures such as beams, columns, bridges, parapets, walls, underpasses, overpasses.

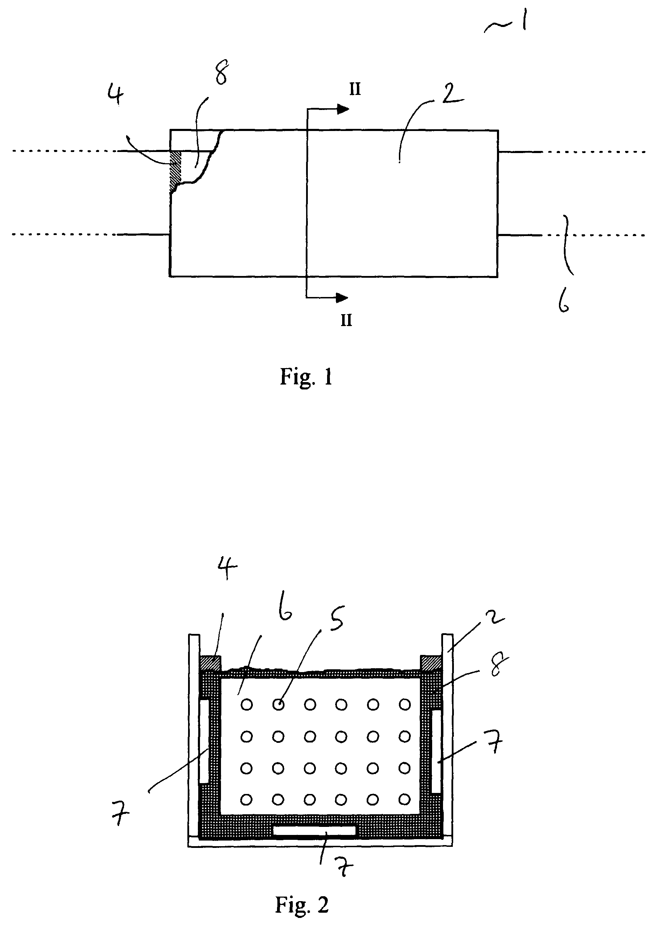

Fig. 1 is a schematic side view and Fig. 2 a schematic cross-sectional view II-II through an apparatus 1 for the removal of ionic impurities from reinforced concrete in accordance with a first embodiment of the present invention. The apparatus 1 includes an outer electrolyte container 2 which may be made of any suitable impervious material, preferably plastic. The plastic container 2 may be pre-formed and may be sealed to the concrete structure 6 by means of seals 4 which may be of closed-cell rubber, rubber adhesive, sealing putty, mastic or similar material. An alternative and simple and effective way of making a suitable container 2 is to use strong impermeable flexible plastic sheet and to form this into the container 2 on site. The outer edges of the sheet may be clamped sealingly to the concrete structure 6 by means of steel bands or straps which apply pressure to the outer edges of the sheet through continuous rubber pads along the outside of the sheet adjacent to the edges. If necessary a mastic or putty seal may be applied along the outer edge of the sheet, between the sheet and the concrete to seal off any pits recesses or irregularities in the surface of the concrete.

The container 2 is filled to the required level with an electrolyte 8. The concrete deionising process takes several days or weeks. Preferably, the container 2 is also sealed to the concrete so as to reduce evaporation of the electrolyte 8. Liquid electrolyte 8 may be introduced into the container 2 by making a hole in the container which can be sealed again after filling.

Preferably, electrolyte 8 is an aqueous solution of at least a salt. The salt may include the salt of a weak acid. The electrolyte 8 may also include the salt of an organic acid, i.e. those based are carbon chemistry. Typical organic acids are carboxylic or dicarboxylic acids. A non-limiting list of organic acids from which the salt electrolyte 8 may be made is: acetic, carbonic, citric, gluconic, tartaric, benzoic or mixtures and derivatives thereof. Particularly preferred are biodegradable salts of an organic acid, i.e. those which do not represent a hazard either to the environment or to the concrete. Particularly preferred for the removal of chloride from concrete are acetate, or bicarbonate salts, in particular water soluble ammonium, alkali metal or alkaline earth metal acetates or bicarbonates, more preferably sodium or potassium acetate or bicarbonate. Also preferred for chloride removal are water soluble nitrates of ammonium, an alkali metal or an alkali earth metal, in particular sodium or potassium nitrate. The present invention also includes the addition of other agents to the electrolyte 8, for instance, acids or alkalis to control pH, surfactants or pH stabilisers and buffers, thickening agents such as fibres or thixotropic agents although tests have indicated that such additives are not essential to the invention. The concentration of the salt in the water may be typically 0.5 mol/litre but the invention is not limited thereto.

Deionised water may be used to form the salt electrolyte 8. Preferably, the pH of the electrolyte 8 is basic, e.g. a pH in the range 9 to 11. Too high a pH may passivate certain electrodes 7 such as magnesium and too low a pH may result in poor activity of some electrodes, e.g. with aluminium. The elcctrolyte 8 may tend to become more alkaline with time of processing so it may be advisable to start with an electrolyte hjaving a pH at the lower end of the range 9-11.

Also shown in Fig. 2 are the rebar reinforcements 5 in the concrete and one or more electrodes 7 placed in contact with the electrolyte 8. In accordance with the present invention it is not necessary to form a substantial external current connection between the rebar 5 and the electrode 7, e.g. by connecting the two by wires. This avoids the necessity of creating holes in the concrete to make contact with the rebar 5. If required the present invention does include providing such contacts for measurement purposes e.g. to measure the potential difference between the rebar 5 and the electrode 7 which may give some indication of the progress of the deionisation of the concrete but is not essential to the invention.

The electrode material used may depend upon the electrolyte 8 used, the ion to be extracted from the concrete and the material of the rebar 5, particularly the surface material thereof when this is different from the core material of the rebar 5. The purpose of the electrode 7 is to set up an electrochemical cell with the electrolyte 8 and the rebar 5 so that the ion to be removed is attracted to the electrode 7 and repelled from the rebar 5. Distinction is often made between an electrolytic cell in which an external supply of electric power electrolyses an electrolyte, and a galvanic cell in which there is no external current source but a potential difference is generated. The electrochemical cell in accordance with the present invention is not an electrolytic cell in accordance with this nomenclature as there is no external current source. The method of removal of ionic impurities in accordance with the present invention may be described as galvanic removal or galvanic assisted removal. For this purpose there should be a difference in electronegativity between the electrode 7 and the rebar 5. It is also preferable if the electrode 7 is a sacrificial electrode within the electrochemical cell created by the electrode 7, the rebar 5 and the electrolyte 8. It should be understood that the electrochemical cell generated may not be the only process transporting the chloride out of the concrete, for instance, there may also be diffusion or osmotic forces on the chloride ions. Hence, the electrochemical cell created by the system in accordance with the present invention may assist the flow of chloride ions out of the concrete as one of several beneficial processes. For anions such as chloride or sulphate ions, the electrode 7 should form a cell in which it is the anode and the rebar 5 the cathode. To remove positive ions from the concrete, the electrode 7 should be the cathode. For normal forms of steel reinforcing in concrete and for removal of chloride ions, aluminium or magnesium electrodes 7 are preferred, although manganese and zinc may also be used. It is anticipated that there are no specific limitations on the form of the electrode 7. For example, the electrode 7 may be in the form of strips of metal or a net or grid or blocks of metal.

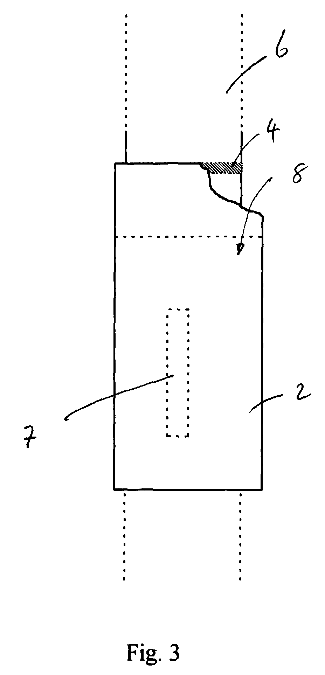

Fig. 3 shows another embodiment of the present invention for the treatment of a vertical or inclined section of reinforced concrete. The principles are the same as described with respect to Figs. 1 and 2. Electrodes 7 such as magnesium or aluminium, may be placed against the concrete structure 6. An outer container 2 is either pre-constructed and placed, or constructed on site around the concrete structure 6 and electrodes 7, for instance from plastic sheeting and the space between the concrete and the sheet is filled with electrolyte of the type described above. If considerable heights are to be treated the pressure generated at the bottom of the container 2 may be high. To prevent bursting of the container 2, either a rigid material may be used for the construction of the container 2 or a plurality of smaller containers 2 may be used. Further, a container 2 having a height less than the complete height may be used to progressively treat the complete height by moving the container 2 after each treatment period to a new section.

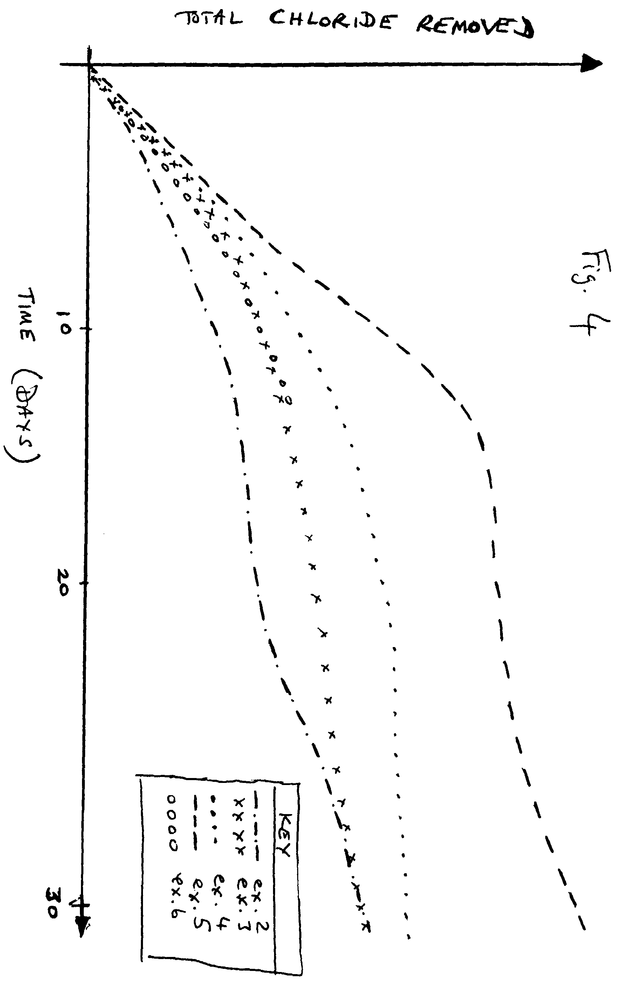

Various tests have been carried out using the novel method and apparatus in accordance with the present invention. Reinforced concrete samples were prepared and impregnated with chloride ions. The samples were then treated in accordance with the present invention using the following combinations:
example 1: aluminium electrode, 0.5 mol/litre sodium nitrate solution in water,
example 2: aluminium electrode, 0.5 mol/litre sodium bicarbonate solution in water,
example 3: aluminium electrode, 0.5 mol/litre sodium acetate solution in water,
example 4: magnesium electrode, 0.5 mol/litre sodium bicarbonate in water,
example 5: magnesium electrode, 0.5 mol/litre sodium acetate solution in water
example 6: magnesium electrode, 0.74 mol/litre sodium acetate solution in water.
The amount of chloride extracted versus time is plotted in Fig. 4. Example 1 was not plotted separately as the results were almost identical to those of example 6. The results for all the combinations indicate that, surprisingly, considerable amounts of chloride may be extracted from the concrete over a period of time of several weeks without the use of an external current source. The most preferred combination was example 5, a magnesium electrode with sodium acetate electrolyte. The less good results of example 2 in the first 20 days was found to be due to a low pH of under 9. This was corrected on day 25 and the results then indicate that subsequently better performance was obtained.

Further tests were carried out on the influence of temperature and a positive coefficient was detected, i.e. that the rate of chloride removal increased with increasing temperature. In accordance with the present invention it is preferred if the removal of ionic impurities is carried out at the warmer times of the year.

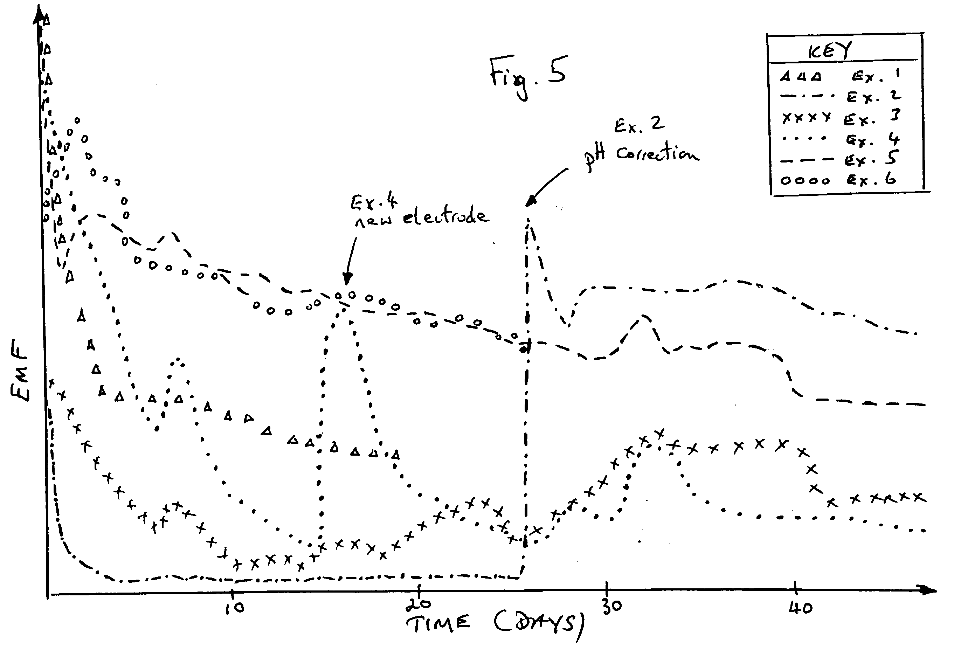

Fig. 5 the voltage difference (EMF) between the rebar 5 and the electrode 7 versus time for the above examples. Noticeable is the rise in potential in example 2 after pH correction as well as the consistently higher values for the combination magnesium electrode and acetate electrolyte of sample 5. Additional electrodes were introduced into the electrolyte of example 4 after 14 days. This resulted in an increase in EMF which however rapidly decayed again. There was no significant change in chloride removal as can be seen from Fig. 4. It is noticeable that removal of chloride continues even in the examples with low EMF but that increases in the EMF are sometimes accompanied by some increase in the rate of removal of chloride. This indicates that the electrochemical potentials generated are not necessarily the only forces influencing the processes of chloride removal in accordance with the present invention but that these electrochemical forces may assist such removal.

While the invention has been shown and described with reference to preferred embodiments, it will be understood by those skilled in the art that various changes or modifications in form and detail may be made without departing from the scope and spirit of this invention as defined in the attached claims. For example, the concrete surfaces may be cleaned by high pressure water jets or sand blasting before application of the container 2. Further, a stirrer may be introduced into the electrolyte to prevent passivation of the electrodes 7 by concentration of impurities therearound. The stirrer may be operated intermittently, e.g. once a day and may be driven by solar cells. To reduce evaporation layers of plastic balls may be floated on the surface of the electrolyte where this is possible. Further, to obtain maximum wetting of the concrete surface liquid electrolytes are preferred. However, the present invention includes the use of thixotropic agents or thickeners such as cellulosic fibres in the electrolyte to reduce the fluidity of the electrolyte and hence making it easier to contain, form seals and reduce evaporation. Further, the electrolyte may be applied to the concrete surface in the form of pre-impregnated sponge or fibrous material, e.g. sheets. The concentration of the electrolyte may also be different from the values given above, e.g. between 0.1 and 1.5 mol/litre.

## Claims

1. A method of removing an ionic impurity from a reinforced concrete structure comprising the steps of:
contacting the surface of the concrete structure with an aqueous electrolyte;
contacting the electrolyte with an electrode material other than the metal reinforcing of the concrete structure to form an electrochemical cell between the metal reinforcing and the electrode, and
while the ionic impurity is being removed: preventing any substantial electrical current connection external to the concrete between the electrode material and the material of the reinforcing.

2. A method of removing an ionic impurity from a reinforced concrete structure comprising the steps of:
contacting the surface of the concrete structure with an aqueous electrolyte including a salt of an organic acid, and
contacting the electrolyte with an electrode material other than the metal reinforcing of the concrete structure to form an electrochemical cell between the metal reinforcing and the electrode.

3. A method according to claim 1, wherein the electrolyte includes the aqueous solution of salt of a weak acid, preferably of an organic acid.

4. A method according to any previous claim, wherein the electrolyte includes an aqueous solution of an acetate or bicarbonate, in particular a water soluble ammonium, alkali metal or alkaline earth metal acetate or bicarbonate, more preferably sodium or potassium acetate or bicarbonate, or
a water soluble nitrate of ammonium, an alkali metal or an alkali earth metal, in particular sodium or potassium nitrate.

5. A method according to any previous claim, wherein the electrode is one of magnesium, zinc, manganese or aluminium.

6. Method according to any previous claim, wherein the concrete surface is immersed in the electrolyte.

7. An apparatus for removing an ionic impurity from a reinforced concrete structure comprising:
a container surrounding a portion of the surface of the concrete structure;
an aqueous electrolyte in the container and in contact with the portion of the surface of the concrete structure;
an electrode material other than the metal of the concrete reinforcing contacting the electrolyte and forming an electrochemical cell with the metal reinforcing; and
substantially no current connection for removing the ionic impurity external to the concrete between the electrode material and the metal reinforcing.

8. An apparatus for removing an ionic impurity from a reinforced concrete structure comprising:
a container for holding an aqueous electrolyte including a salt of an organic acid in contact with the surface of the concrete structure, and
an electrode material other than the material of the metal reinforcing of the concrete contacting the electrolyte and forming an electrochemical cell with the metal reinforcing.

9. An apparatus according to claim 7, wherein the electrolyte includes the salt of a weak acid, preferably of an organic acid.

10. An apparatus according to any of claims 7 to 9, wherein the electrolyte includes an aqueous solution of an acetate or bicarbonate, in particular a water soluble ammonium, alkali metal or alkaline earth metal acetate, or
bicarbonate, more preferably sodium or potassium acetate or bicarbonate or a water soluble nitrate of ammonium, an alkali metal or an alkali earth metal, in particular sodium or potassium nitrate.

11. An apparatus according to any of claims 7 to 10, wherein the electrode is one of magnesium, zinc, manganese or aluminium.
